# EUROPEAN PATENT APPLICATION

(11) **EP 0 783 007 A2**
(43) Date of publication of application: **09.07.1997**
(21) Application number: 97300009.4
(22) Date of filing: 02.01.1997
(51) Int. Cl.: C08F 210/16, C08F 2/34

(54) **High strength polyethylene film**

(30) Priority: 04.01.1996 US 582871
(71) Applicant: UNION CARBIDE CHEMICALS & PLASTICS TECHNOLOGY CORPORATION, Danbury, Connecticut 06817-0001 (US)
(72) Inventor: Hwu, Mark Chung-Kong, Belle Mead, New Jersey 08502 (US); Spaulding, Christina Mae, Dunbar, W. Virginia 25064 (US); Spriggs, Thomas Edward, Cross Lanes, W. Virginia 25313 (US)
(74) Representative: Allard, Susan Joyce

(57) **Abstract**

A process comprising contacting ethylene and at least one alpha-olefin comonomer having 3 to 8 carbon atoms with a magnesium/titanium based catalyst system including a supported or spray dried catalyst precursor, which contains an electron donor, and a cocatalyst in at least one fluidized bed reactor, in the gas phase, under polymerization conditions, with the provisos that:
(i) the cocatalyst is triethylaluminum and a sufficient amount of cocatalyst is added to activate the catalyst precursor; and
(iii) the atomic ratio of aluminum to titanium is in the range of about 10:1 to about 22:1.

## Description

### Technical Field

This invention relates to a process for preparing polyethylene, which can be converted into high strength film.

### Background Information

There has been a rapid growth in the market for linear low density polyethylene (LLDPE), particularly resin made under mild operating conditions; typically at pressures of 100 to 300 psi and reaction temperatures of less than 100° C. This low pressure process provides a broad range of LLDPE products for blown and cast film, injection molding, rotational molding, blow molding, pipe, tubing, and wire and cable applications. LLDPE has essentially a linear backbone with only short chain branches, about 2 to 6 carbon atoms in length. In LLDPE, the length and frequency of branching, and, consequently, the density, is controlled by the type and amount of comonomer used in the polymerization. Although the majority of the LLDPE resins on the market today have a narrow molecular weight distribution, LLDPE resins with a broad molecular weight distribution are available for a number of non-film applications.

LLDPE resins designed for commodity type applications typically incorporate 1-butene as the comonomer. The use of a higher molecular weight alpha-olefin comonomer produces resins with significant strength advantages relative to those of ethylene/1-butene copolymers. The predominant higher alpha-olefin comonomers in commercial use are 1-hexene, 4-methyl-1-pentene, and 1-octene. The bulk of the LLDPE is used in film products where the excellent physical properties and drawdown characteristics of LLDPE film makes this film well suited for a broad spectrum of applications. Fabrication of LLDPE film is generally effected by the blown film and slot casting processes. The resulting film is characterized by excellent tensile strength, high ultimate elongation, good impact strength, excellent puncture resistance, and toughness. While LLDPE is generally considered to refer to polyethylenes having densities in the range of 0.915 to 0.925 gram per cubic centimeter, the foregoing characteristics can be applied to very low density polyethylenes, which typically have densities in the range of 0.860 to 0.914 gram per cubic centimeter, and medium density polyethylenes, which typically have densities in the range of 0.926 to 0.940 gram per cubic centimeter.

These polyethylenes can be made by well-known polymerization processes utilizing magnesium/titanium catalyst systems. In United States Reissue Patent 33,683, the patentees found that by substituting trimethylaluminum (TMA) for triethylaluminum (TEAL) as a cocatalyst in these processes, they were able to improve the polyethylene product in terms of bulk density and lower melt flow ratios, and the resulting film in terms of lower hexane extractables and higher dart drop strength. However, TMA is so much more expensive than TEAL that it raises the cost of the production of commodity polyethylene to a prohibitive level. Since industry is constantly striving to produce the lowest cost commodity polyethylene, a TMA alternative would certainly be advantageous provided that the TMA resin properties can be achieved.

### Disclosure of the Invention

An object of this invention, therefore, is to provide a process for preparing polyethylene having the positive characteristics ascribed above to a TMA activated catalyst system, which does not require TMA. Other objects and advantages will become apparent hereinafter.

According to the present invention such a process for preparing high strength polyethylene has been discovered. The process comprises contacting ethylene and at least one alpha-olefin comonomer having 3 to 8 carbon atoms with a magnesium/titanium based catalyst system including a supported or spray dried catalyst precursor, which contains an electron donor, and a cocatalyst in at least one fluidized bed reactor, in the gas phase, under polymerization conditions, with the provisos that:
(i) the cocatalyst is triethylaluminum and is present in a sufficient amount to activate the precursor; and
(ii) the atomic ratio of aluminum to titanium is in the range of about 10:1 to about 22:1.

### Description of the Preferred Embodiment(s)

The polyethylene produced is a copolymer of ethylene and at least one alpha-olefin comonomer having 3 to 8 carbon atoms, preferably one or two alpha-olefin comonomers. The alpha-olefins can be, for example, propylene, 1-butene, 1-hexene, 4-methyl-1-pentene, and 1-octene.

United States patent 5,106,926 provides an example of a magnesium/titanium based catalyst system useful in the process of this invention. The system comprises:
(a) a catalyst precursor having the formula Mg_{d}Ti(OR)ₑX_{f}(ED)_{g} wherein R is an aliphatic or aromatic hydrocarbon radical having 1 to 14 carbon atoms or COR' wherein R' is aliphatic or aromatic hydrocarbon radical having 1 to 14 carbon atoms; each OR group is the same or different; X is independently chlorine, bromine or iodine; ED is an electron donor; d is 0.5 to 56; e is 0, 1, or 2; f is 2 to 116; and g is 1.5d+2;
(b) at least one modifier having the formula BX3 or AlR₍₃₋ₑ₎Xₑ wherein each R is alkyl or aryl and is the same or different, and X and e are as defined above for component (a)
   wherein components (a) and (b) are impregnated into an inorganic support; and
(c) various cocatalysts such as triethylaluminum.

The precursor is prepared from a titanium compound, a magnesium compound, and an electron donor. Titanium compounds, which are useful in preparing these precursors, have the formula Ti(OR)ₑXₕ wherein R, X, and e are as defined above for component (a); h is an integer from 1 to 4; and e+h is 3 or 4. Examples of titanium compounds are TiCl₃, TiCl₄, Ti(OC₂H₅) ₂Br₂, Ti(OC₆H₅)Cl₃, Ti(OCOCH₃) Cl₃, and Ti(OCOC₆H₅)Cl₃.

The magnesium compounds include magnesium halides such as MgCl₂, MgBr₂, and MgI₂. Anhydrous MgCl₂ is a preferred compound. About 0.5 to 56, and preferably about 1 to 10, moles of the magnesium compounds are used per mole of titanium compounds.

The magnesium/titanium based catalyst system can also be exemplified by the catalyst system described in United States patent 4,302,565. Another catalyst system is one where the precursor is formed by spray drying and used in slurry form. Such a catalyst precursor, for example, contains titanium, magnesium, and an electron donor, and, optionally, an aluminum halide. The precursor is then introduced into a hydrocarbon medium such as mineral oil to provide the slurry form. This is described in United States patent 5,290,745.

The electron donor, which is used in the catalyst systems described herein, is an organic Lewis base, liquid at temperatures in the range of about 0°C to about 200°C, in which the magnesium and titanium compounds are soluble. The electron donor can be an alkyl ester of an aliphatic or aromatic carboxylic acid, an aliphatic ketone, an aliphatic amine, an aliphatic alcohol, an alkyl or cycloalkyl ether, or mixtures thereof, each electron donor having 2 to 20 carbon atoms. Among these electron donors, the preferred are alkyl and cycloalkyl ethers having 2 to 20 carbon atoms; dialkyl, diaryl, and alkylaryl ketones having 3 to 20 carbon atoms; and alkyl, alkoxy, and alkylalkoxy esters of alkyl and aryl carboxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propionate.

While an excess of electron donor is used initially to provide the reaction product of titanium compound and electron donor, the reaction product finally contains about 1 to about 20 moles of electron donor per mole of titanium compound and preferably about 1 to about 10 moles of electron donor per mole of titanium compound.

In the process of this invention, modifiers are optional, but they are commonly used with any of the magnesium/titanium based catalyst precursors. The modifier can have the formulas mentioned above or the formula AlRₐX_{b}H_{c} wherein each X is independently chlorine, bromine, iodine, or OR'; each R and R' is independently a saturated aliphatic hydrocarbon radical having 1 to 14 carbon atoms; b is 0 to 1.5; c is 0 or 1; and a+b+c = 3. Preferred modifiers include alkylaluminum mono- and dichlorides wherein each alkyl radical has 1 to 6 carbon atoms and the trialkylaluminums. Examples are diethylaluminum chloride and tri-n-hexylaluminum. If it is desired to use a modifier, about 0.1 to about 10 moles, and preferably about 0.15 to about 2.5 moles, of modifier can be used per mole of electron donor. The modifier is usually dissolved in an organic solvent such as isopentane and, where a support is used, impregnated into the support following impregnation of the titanium compound or complex, after which the supported catalyst precursor is dried.

Modifiers can also be represented by the formula R₃Al or R₂AlX wherein each R is independently alkyl, cycloalkyl, aryl, or hydrogen; at least one R is hydrocarbyl; and two or three R radicals can be joined to form a heterocyclic structure. Each R, which is a hydrocarbyl radical, can have 1 to 20 carbon atoms, and preferably has 1 to 10 carbon atoms. X is a halogen, preferably chlorine, bromine, or iodine. Examples of hydrocarbyl aluminum compounds are as follows: triisobutylaluminum, tri-n-hexyl-aluminum, di-isobutyl-aluminum hydride, dihexylaluminum dihydride, di-isobutyl-hexylaluminum, isobutyl dihexylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, tritolylaluminum, dibutylaluminum chloride, diethylaluminum chloride, and ethylaluminum sesquichloride.

In those cases where the precursor is supported, silica is the preferred support. Other suitable supports are inorganic oxides such as aluminum phosphate, alumina, silica/alumina mixtures, silica modified with diethyl zinc, and silica modified with triethylaluminum. A typical support is a solid, particulate, porous material essentially inert to the polymerization. It is used as a dry powder having an average particle size of about 10 to about 250 microns and preferably about 30 to about 100 microns; a surface area of at least 200 square meters per gram and preferably at least about 250 square meters per gram; and a pore size of at least about 100 angstroms and preferably at least about 200 angstroms. Generally, the amount of support used is that which will provide about 0.1 to about 1.0 millimole of titanium per gram of support and preferably about 0.4 to about 0.9 millimole of titanium per gram of support. Impregnation of the above mentioned catalyst precursor into a silica support can be accomplished by mixing the precursor and silica gel in the electron donor solvent or other solvent followed by solvent removal under reduced pressure. When a support is not desired, the catalyst precursor can be used in liquid form.

The cocatalyst is preferably added separately neat or as a solution in an inert solvent, such as isopentane, to the polymerization reactor at the same time as the flow of ethylene is initiated. Additional examples of inert solvents are hexane, heptane, toluene, xylene, naphtha, and mineral oil. These solvents can also be employed to introduce the precursor into the reactor. High boiling solvents such as mineral oil are preferred for this purpose. In any event, the cocatalyst, as previously mentioned, is triethylaluminum (TEAL). It is added in a sufficient amount to activate the catalyst precursor. In the process of this invention, the TEAL contributes enough aluminum to provide an aluminum/titanium atomic ratio in the range of about 10:1 to about 22:1, and preferably at least about 18:1. This final ratio includes the aluminum, which enters the reactor prior to the additon of the cocatalyst, e.g., via the modifier.

The entire catalyst system, which includes the modified or unmodified precursor and the cocatalyst, is added to the reactor, usually through separate feed lines in order to more effectively control the amount of each of these materials. The precursor and the cocatalyst can be added together, however. Where more than one reactor is used, catalyst is admixed with the copolymer produced in a first reactor, and the mixture transferred to a second reactor. This process mode can be effected in several reactors connected in series. The polymerization in each reactor is, preferably, conducted in the gas phase using a continuous fluidized process. A typical fluidized bed reactor is described in United States patent 4,482,687.

In a typical one reactor polymerization, the operating temperature is generally in the range of about 60° C to about 110° C. Preferred operating temperatures vary depending on the density desired, i.e., lower temperatures for lower densities and higher temperatures for higher densities. The pressure, i.e., the total pressure in the reactor, can be in the range of about 200 to about 450 psi and is preferably in the range of about 280 to about 350 psig. The ethylene partial pressure is at least about 20 psi and is preferably at least about 90 psi. The balance of the total pressure is provided by alpha-olefin other than ethylene and an inert gas such as nitrogen.

A typical fluidized bed reactor can be described as follows:

The bed is usually made up of the same granular resin that is to be produced in the reactor. Thus, during the course of the polymerization, the bed comprises formed polymer particles, growing polymer particles, and catalyst particles fluidized by polymerization and modifying gaseous components introduced at a flow rate or velocity sufficient to cause the particles to separate and act as a fluid. The fluidizing gas is made up of the initial feed, make-up feed, and cycle (recycle) gas, i.e., comonomers and, if desired, modifiers and/or an inert carrier gas.

The essential parts of the reaction system are the vessel, the bed, the gas distribution plate, inlet and outlet piping, a compressor, cycle gas cooler, and a product discharge system. In the vessel, above the bed, there is a velocity reduction zone, and, in the bed, a reaction zone. Both are above the gas distribution plate.

A typical fluidized bed reactor is described in United States patent 4,482,687.

The gaseous feed streams of ethylene, other gaseous alpha-olefins, and hydrogen, when used, are preferably fed to the reactor recycle line as well as liquid alpha-olefins and the cocatalyst solution. Optionally, the cocatalyst solution can be fed directly to the fluidized bed. The catalyst precursor is preferably injected into the fluidized bed as a solid or a mineral oil slurry. In order to start up the polymerization reaction, it is suggested that a high level of triethylaluminum be used initially, e.g., an Al/Ti atomic ratio of about 40:1 or higher. As soon as the reaction is started and the reaction has stabilized, the Al/Ti ratio is cut back to about 10:1 to about 22:1, and the process of the invention proceeds from that point. The product composition can be varied by changing the molar ratios of the comonomers introduced into the fluidized bed. The product is continuously discharged in granular or particulate form from the reactor as the bed level builds up with polymerization. The production rate is controlled by adjusting the catalyst feed rate.

A typical way to insure the operation of the polymerization reactor at Al/Ti atomic ratios of about 10:1 to about 22:1 is to use two extremely accurate flow meters to verify TEAL flow rates, and to dilute the TEAL to achieve higher flow rates. The frequent monitoring of the Al/Ti atomic ratio as well as other product properties such as melt indices can also be used to make certain the atomic ratio is maintained. This is very important because an increase in TEAL concentration will change hydrogen, comonomer, and ethylene responses leading to off-spec resin, risk of runaway reaction or formation of agglomerates, and reduced dart drop strength.

The hydrogen:ethylene molar ratio can be adjusted to control average molecular weights. The alpha-olefins (other than ethylene) can be present in a total amount of up to 20 percent by weight of the copolymer and are preferably included in the copolymer in a total amount of about 1 to about 15 percent by weight based on the weight of the copolymer.

Several steps can be taken, in addition to temperature control, to prevent agglomeration. The product discharge line between the reactor and the product pot is often plugged up with chunks between intervals of product drops. A continuous purge flow of nitrogen or reactor gas in the line prevents the plugging problem. Also, coating the reactor surface with a low surface energy material is shown to be beneficial to slow down the rate of fouling build up. In addition, control of the electrostatic level in the bed prevents static induced particle agglomeration. Static can be adjusted to a satisfactory level by controlled use of reaction rate, avoidance of quick change of gas composition, selective use of static-neutralizing chemicals and surface passivation with aluminum alkyls.

The residence time of the mixture of reactants including gaseous and liquid reactants, catalyst, and resin in the fluidized bed can be in the range of about 1 to about 12 hours and is preferably in the range of about 2 to about 5 hours.

The resin product can be extruded into film in a conventional extruder adapted for that purpose. Extruders and processes for extrusion are described in United States patents 4,814,135; 4,857,600; 5,076,988; and 5,153,382. Examples of various extruders, which can be used in forming the film are a single screw type such as one modified with a blown film die and air ring and continuous take off equipment, a blown film extruder, and a slot cast extruder. A typical single screw type extruder can be described as one having a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and multiple heating zones from the rear heating zone to the front heating zone, the multiple sections and zones running from upstream to downstream. If it has more than one barrel, the barrels are connected in series. The length to diameter ratio of each barrel is in the range of about 16:1 to about 30:1. The extrusion can take place at temperatures in the range of about 160 to about 270 degrees C, and is preferably carried out at temperatures in the range of about 180 to about 240 degrees C.

The advantages of the invention found in the resin product are improved bulk densities and lower melt flow ratios; in the resulting film, lower hexane extractables and higher dart impact strength; and, overall, in the cost savings of TEAL over TMA.

Conventional additives, which can be introduced into the resin, are exemplified by antioxidants, ultraviolet absorbers, antistatic agents, pigments, dyes, nucleating agents, fillers, slip agents, fire retardants, plasticizers, processing aids, lubricants, stabilizers, smoke inhibitors, viscosity control agents, and crosslinking agents, catalysts, and boosters, tackifiers, and anti-blocking agents. Aside from the fillers, the additives can be present in the resin in amounts of about 0.1 to about 10 parts by weight of additive for each 100 parts by weight of polymer. Fillers can be added in amounts up to 200 parts by weight and more for each 100 parts by weight of the resin.

Patents mentioned in this specification are incorporated by reference herein.

The invention is illustrated by the following examples:

### Examples 1 to 8

CATALYST PRECURSOR A: A titanium trichloride catalyst precursor is prepared in a 1900 liter vessel equipped with pressure and temperature controls and a turbine agitator. A nitrogen atmosphere (less than 5 ppm H₂0) is maintained at all times.

1480 liters of anhydrous tetrahydrofuran (THF) containing less than 40 ppm H₂0 are added to the vessel. The THF is heated to a temperature of 50 degrees C, and 1.7 kilograms of granular magnesium metal (70.9 gram atoms) are added, followed by 27.2 kilograms of titanium tetrachloride (137 mols). The magnesium metal has a particle size in the range of from 0.1 to 4 millimeters. The titanium tetrachloride is added over a period of about one-half hour.

The mixture is continuously agitated. The exotherm resulting from the addition of titanium tetrachloride causes the temperature of the mixture to rise to approximately 72 degrees C over a period of about three hours. The temperature is held at about 70 degrees C by heating for approximately another four hours. At the end of this time, 61.7 kilograms of magnesium dichloride (540 mols) are added and heating is continued at 70 degrees C for another eight hours. The mixture (solution) is then filtered through a 100 micron filter to remove undissolved magnesium dichloride and unreacted magnesium (less than 0.5 percent by weight).

100 kilograms of fumed silica having a particle size in the range of from 0.1 to 1 microns are added to the mixture prepared above over a period of about two hours. The mixture is stirred by means of a turbine agitator during this time and for several hours thereafter to thoroughly disperse the silica in the solution. The temperature of the mixture is held at 70 degrees C throughout this period and a nitrogen atmosphere is maintained at all times.

The resulting slurry is spray dried using an 8-foot diameter closed cycle spray dryer equipped with a rotary atomizer. The rotary atomizer is adjusted to give catalyst particles with a D50 of 12 microns. The scrubber section of the spray dryer is maintained at approximately minus 4 degrees C..

Nitrogen gas is introduced into the spray dryer at an inlet temperature of 140 degrees C and is circulated at a rate of approximately 1700 kilograms per hour. The catalyst slurry is fed to the spray dryer at a temperature of about 35 degrees C and a rate of 90 to 95 kilograms per hour, or sufficient to yield an outlet gas temperature of approximately 100 degrees C. The atomization pressure is slightly above atmospheric. Discrete spray dried catalyst precursor particles are formed.

The spray dried catalyst contains 2.5 weight percent Ti, 6.3 weight percent Mg, and 29.2 weight percent THF. The particles have a D10 of 8 microns, a D50 of 12 microns, and a D90 of 18.6 microns as determined by means of a Leeds and Northrup Microtrac^{TM} particle size analyzer using a dodecane solvent.

The discrete catalyst precursor particles are mixed with mineral oil under a nitrogen atmosphere in a 400 liter vessel equipped with a turbine agitator to form a slurry containing approximately 28 weight percent of the solid catalyst precursor. A 50 weight percent solution of tri-n-hexylaluminum in mineral oil is added and the slurry is stirred for one hour. The tri-n-hexylaluminum solution is employed in an amount sufficient to provide 0.2 mol of tri-n-hexylaluminum per mol of THF in the catalyst. A 30 weight percent solution of diethylaluminum chloride (DEAC) in mineral oil is then added and the mixture is stirred for another hour. The DEAC is employed in an amount sufficient to provide 0.45 mol of DEAC per mol of THF in the catalyst.

CATALYST PRECURSOR B: A titanium trichloride catalyst precursor is prepared in a 600 liter vessel equipped with pressure and temperature controls, and a turbine agitator. A nitrogen atmosphere (less than 5 ppm H₂O) is maintained at all times.

460 liters of anhydrous THF (less than 40 ppm H₂O) are added to the vessel, followed by 18.7 kilograms of anhydrous (less than 100 ppm H₂O) magnesium dichloride (196 mols) and 7.67 kilograms of TiCl₃• 1/3 AlCl₃ (3805 mols TiCl₃). The pressure of the mix tank is increased to 140 millimeters mercury and the mixture is agitated and heated at 80 degrees C for 4 to 6 hours to dissolve the magnesium and titanium compounds. The mixture is filtered through a 100 micron filter to remove undissolved magnesium chloride(less than 40.5 weight percent).

500 grams of porous silica dehydrated to 800 degrees C, and optionally treated with 4 to 8 weight percent TEAL, are added to the above solution and stirred for 2 hours at 80 degrees C and 1200 millimeters mercury. The mixture is dried by reducing pressure and allowing the excess THF to flash. The resulting catalyst precursor is a dry free flowing powder having the particle size of the silica. The adsorbed precursor has the following formula:

Ti Mg_{3.0}Cl₁₀THF_{6.7}

The desired weight of the above precursor is added to the mix tank with a sufficient amount of isopentane to provide a slurry system. A 20 weight percent solution of DEAC in isopentane is added to the mix tank. The DEAC is employed to provide 0.45 mol of DEAC per mol of THF in the precursor. The mixture is stirred for 30 minutes to let the DEAC react with the precursor. A 20 weight percent solution of tri-n-hexylaluminum in isopentane is added to the mix tank. The tri-n-hexylaluminum is employed in an amount sufficient to provide 0.20 mol of tri-n-hexylaluminum per mol of THF in the precursor. The mixture is stirred for 30 minutes to let the tri-n-hexylaluminum react with the precursor.

Once the slurry is thoroughly mixed, it is then dried under a dry nitrogen purge at a temperature of 70 degrees C to remove the isopentane. The resulting precursor is impregnated into the pores of the silica. The precursor is a dry free flowing powder having the particle size of the silica.

CATALYST PRECURSOR C: The catalyst precursor is prepared in the same manner as CATALYST PRECURSOR A except that the amount of tri-n-hexylaluminum used is sufficient to provide 0.30 mol of tri-n-hexylaluminum per mol of THF and the amount of DEAC used is sufficient to provide 0.40 mol of DEAC per mol of THF.

CATALYST PRECURSOR D: The catalyst precursor is prepared in the same manner as CATALYST PRECURSOR B except that the amount of tri-n-hexylaluminum used is sufficient to provide 0.30 mol of tri-n-hexylaluminum per mol of THF and the amount of DEAC used is sufficient to provide 0.40 mol of DEAC per mol of THF.

Ethylene is copolymerized with 1-hexene in a fluidized bed reactor in each example. The total pressure in each reactor is 300 psia. Each polymerization is continuously conducted after equilibrium is reached under conditions set forth in the Table. Polymerization is initiated in the first reactor by continuously feeding the catalyst precursor and cocatalyst into a fluidized bed of polyethylene granules together with ethylene, 1-hexene, and hydrogen. The cocatalysts (TEAL or TMA) are first dissolved in isopentane (1 to 5 percent by weight cocatalyst). The product blend is continuously removed.

In addition to polymerization condition variables, resin properties, and a film property are given in the following Table.

Examples 1 and 2 use conventional TEAL levels; examples 3 and 4 use conventional TMA levels; example 6 uses less than conventional TEAL levels, i.e., an aluminum/titanium atomic ratio of 29; and examples 5, 7, and 8 are embodiments of the invention and use reduced TEAL levels, i.e., aluminum/titanium atomic ratios of 19, 20, and 20, respectively.

Comparing conventional TMA example 3 with conventional TEAL example 1 (these examples use closely similar supported catalysts), it is observed that, in example 3, the hydrogen need increases, the catalyst productivity decreases, but the dart drop strength, which is so important in a high strength polyethylene, increases dramatically. The same is true when comparing conventional TMA example 4 with conventional TEAL example 2 (these examples use closely similar spray dried catalysts).

Comparing TEAL example 5 (an embodiment of the invention) with conventional TEAL example 1 (these examples use closely similar supported catalysts), it is observed that, in example 5, the hydrogen need increases, the catalyst productivity decreases, and the dart drop strength dramatically increases.

Comparing less than conventional TEAL example 6 to conventional TEAL example 1, it is observed that, in example 6, the hydrogen need increases, the catalyst productivity decreases, but the dart drop strength does **not** increase.

Comparing TEAL examples 7 and 8 (embodiments of the invention) with conventional TEAL example 2 (these examples use closely similar spray dried catalysts), it is observed that, in examples 7 and 8, the hydrogen need increases, the catalyst productivity decreases, and the dart drop strength dramatically increases.

Less than conventional TEAL example 6 shows the criticality of the Al/Ti atomic ratio when using TEAL. At Al/Ti atomic ratios of about 23 or more, the dart drop strength is low, but at Al/Ti atomic ratios of about 22 or less, the dart drop strength is dramatically higher.

Thus, inexpensive TEAL at low levels is found to be an excellent substitute for the more expensive TMA in magnesium/titanium based catalyst systems that are either supported or spray dried.

It is observed, however, that the use of the TEAL cocatalyst at levels below the Al/Ti atomic ratio of about 10:1, drops the productivity sharply, and makes the reactor more susceptible to sheeting and static. In addition, properties are even more difficult to control because of the further decrease in hydrogen response.

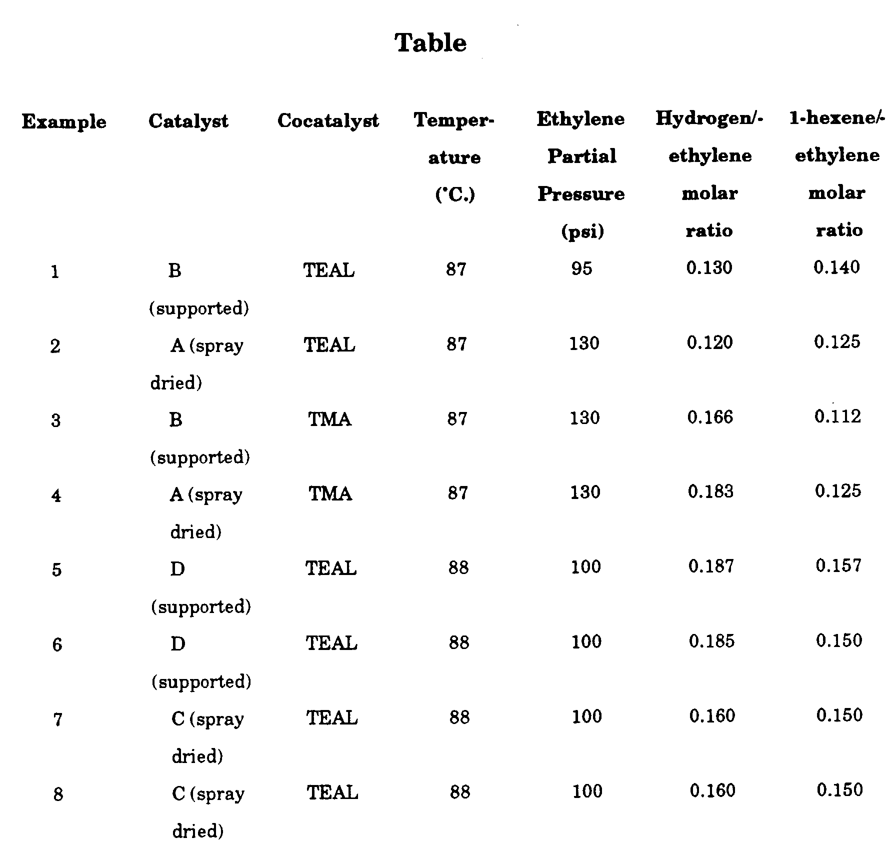

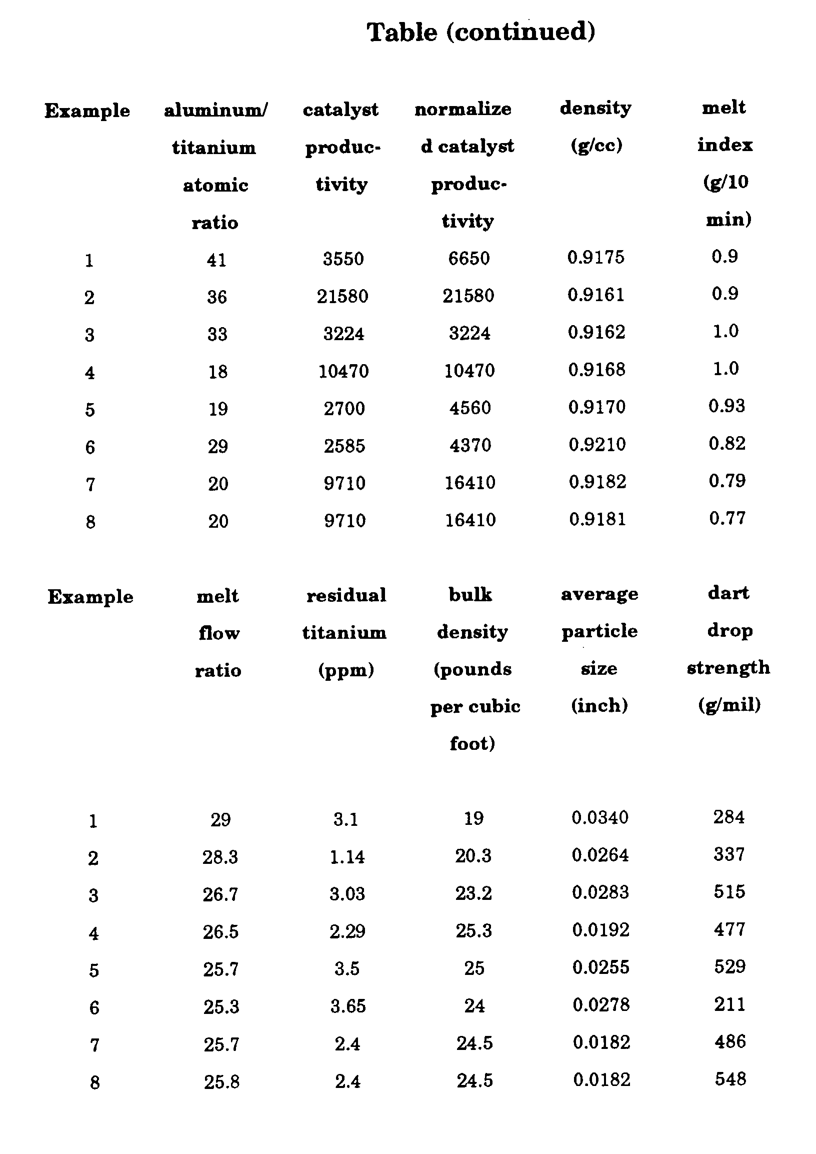

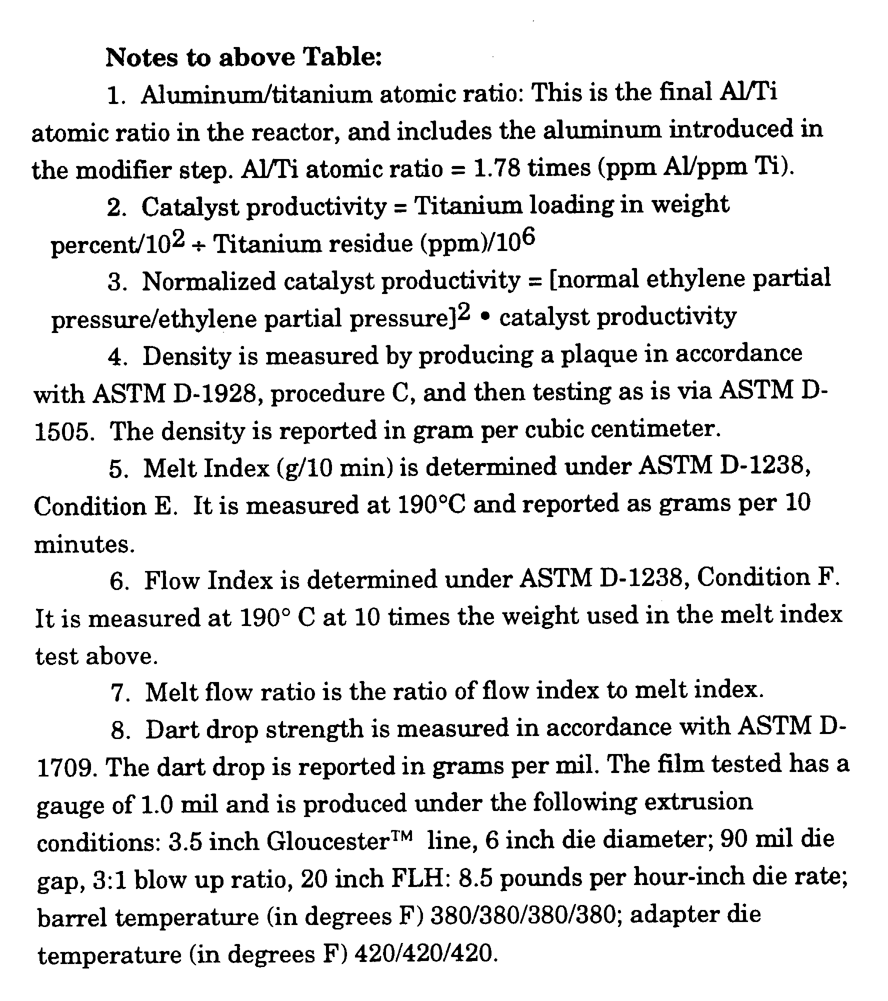

## Claims

1. A process for preparing an ethylene copolymer comprising contacting ethylene and at least one alpha-olefin comonomer having from 3 to 8 carbon atoms with a magnesium/titanium based catalyst system including a supported or spray dried catalyst precursor, which contains an electron donor, and a cocatalyst in at least one fluidized bed reactor, in the gas phase, under polymerization conditions, with the provisos that:
(i) the cocatalyst is triethylaluminum and a sufficient amount of cocatalyst is added to activate the catalyst precursor; and
(ii) the atomic ratio of aluminum to titanium is in the range of from 10:1 to 22:1.

2. A process as claimed in claim 1 wherein the comonomer is 1-butene or 1-hexene.

3. A process as claimed in claim 1 or claim 2 wherein the catalyst precursor is spray dried.

4. A process as claimed in claim 1 or claim 2 wherein the catalyst precursor is supported.

5. A process as claimed in claim 4 wherein the catalyst precursor is supported on silica.

6. A process as claimed in any one of the preceding claims which additionally includes a modifier which is introduced into the catalyst precursor in an amount of 0.1 to 10 mols of modifier per mol of electron donor prior to its introduction into the reactor.

7. A process as claimed in claim 6 wherein the modifier is used in an amount of from 0.15 to 2.5 moles per mole of the electron donor.

8. A process as claimed in claim 6 or claim 7 wherein the atomic ratio of aluminum to titanium is in the range of from 18:1 to 22:1.
